# EUROPEAN PATENT APPLICATION

(11) **EP 3 335 798 A1**
(43) Date of publication of application: **20.06.2018**
(21) Application number: 16204344.2
(22) Date of filing: 15.12.2016
(51) Int. Cl.: B05B 7/00, B05B 7/04, B29B 7/74, B65D 83/68, B05C 17/005, B05B 1/30, B05B 7/12, B65D 83/20, B65D 83/38

(54) **DISPENSING GUN APPARATUS WITH A DISPOSABLE NOZZLE**

(71) Applicant: Greenseal Chemicals nv, 9800 Deinze (BE)
(72) Inventor: De Schrijver, Aster, 9800 Deinze (BE); João Ferreira Simões, Ricardo, 4715-025 Braga (PT); Rui Machado Fontes da Silva, Jorge, 4715-025 Braga (PT); Zhou, Wenquan, Jinhua, Zhejiang 321017 (CN)
(74) Representative: BiiP cvba

(57) **Abstract**

The present invention discloses a dispensing gun apparatus (100) for mixing two or more fluids in a predetermined ratio. The dispensing gun comprises a disposable nozzle (150) and a gun assembly (110). The gun assembly (110) comprises a tubular sleeve (112). The tubular sleeve (112) comprises an outer channel (122) concentric with an inner channel (124). The outer channel (122) is connected to a source of first fluid and the inner channel (124) is connected to a source of second fluid. The disposable nozzle (150) comprises an inlet non-return chamber (252) having a blocking portion (260) and a mixing chamber (254). The dispensing gun (100) further comprises a connecting mechanism for connecting the disposable nozzle (150) to the gun assembly (110) such that when connected, the blocking portion (260) blocks the inner hollow channel (124) of the gun assembly (110).

## Description

### Field of Invention

The present invention relates generally to a dispensing apparatus. More particularly, the present invention relates to a dispensing gun apparatus with a disposable nozzle for use in mixing two or more fluids in a predetermined ratio.

### Background of the Invention

In a variety of applications, it is desirable to mix a plurality of chemically reactive materials with one another, which may then be dispensed using a suitable dispensing apparatus. For example - spray foams, which are generally used to fill gaps, cracks etc, or to provide a coating within various constructions such as buildings, swimming pools, vehicles, etc., is generally formed by mixing multiple components such as a base resin with a catalyst in a specific ratio.

Recently, the use of spray foams in the construction of buildings and vehicles has rapidly expanded. As and after they are applied, the components of the mixture undergo reaction to produce the desired foam. The requirement for mixing the components and thereafter dispensing the formed product has led to designing of a variety of dispensing apparatus adapted to mix plural components.

One kind of foam mixing and dispensing device is disclosed in US3633795. The patent discloses use of multiple pressurized vessels, each containing one of the reactants of the foam product. Each of the pressurized vessel is connected by an individual tube to a dispensing gun. Actuation of a gun trigger permits the fluid components to flow into the gun, where they are intermixed. The mixed foaming product is discharged against a target area. After the spray application, the foam hardens into the finished strong and effective insulation material.

While such devices have met with a great commercial success, these devices are not yet preferred since residual chemically reactive base materials such as polyurethane gets cured and cross-linked to form a solid material which may clog or block the dispensing passages and ports of the apparatus such that the dispensing device will be rendered inoperative. Several attempts have been made to solve the problem of foam solidification within gun apparatus. Some guns have been designed to permit the entire apparatus to be cleaned or purged. Other guns have been provided with replaceable dispensing nozzles or other parts which can be removed and readily replaced with new parts. While some of these mechanisms have operated satisfactorily, these have been expensive to manufacture. Further, such devices based on replaceable nozzles did not offer a proper mixing of the components due to lack of pressure within the mixing chamber of such nozzles.

US4708292 discloses a dispensing apparatus having a replaceable nozzle with a mixing chamber into which the plural materials are introduced by separate inlet ports at an angle such that the separate streams of liquid are directed toward one another for better mixing. Although the above apparatus as well as other prior art dispensing devices have attempted to overcome the deficiencies in properly mixing the reacting components to optimize the production of polyurethane foam or the like, such apparatus is still deficient in some respects such as in specific ratio of the individual liquid components and ensuring proper mixing continuously to optimize the polymerization process without fouling the dispenser in the process. Further, there was a possibility of cross-feeding of one fluid into the inlet of the other fluid thereby clogging the respective inlet.

Therefore, there exists a need in art for an improved dispensing apparatus which while offering a proper mixing of the fluid components, is inexpensive to manufacture as well as avoid other problems such as cross feeding and foam solidification within the dispensing apparatus.

### Summary of the Invention

In one aspect of the present disclosure, a dispensing gun apparatus is provided. The apparatus includes a gun assembly comprising a tubular sleeve extending towards a tip at a distal end. The tubular sleeve includes an outer hollow channel connected to a source of a first fluid through a first valve and an inner hollow channel, concentric with the outer hollow channel, connected to a source of a second fluid through a second valve. The gun assembly further comprises a trigger member for activating the first valve and the second valve in such an order so as to dispense a predetermined amount of fluid through each of the hollow channels in a predetermined manner, such as for example simultaneously or sequentially. The apparatus further comprises a disposable nozzle having a mixing chamber adjacent to an inlet non-return chamber. The non-return chamber comprises a substantially tubular blocking portion extending towards an inlet end of the disposable nozzle. The disposable nozzle may be connected to the gun assembly using a connecting mechanism such that when connected, the blocking portion sealingly blocks the inner hollow channel of the gun assembly.

Optionally, the tip of the tubular sleeve comprises a strangulation point type exit cavity.

Further optionally, the inner hollow channel closes the strangulation point exit cavity when trigger is not activated.

Yet further optionally, when the trigger member is activated, the inner hollow channel is pushed back thereby allowing the flow of the first fluid from the outer hollow channel to pass through the strangulation point type exit into the disposable nozzle.

Possibly, the valve of the first fluid is an always open valve.

Potentially, the source of the first fluid is a pressure reservoir having a pressurizing means so as to keep the fluid pressurized for a flow from the reservoir towards the disposable nozzle.

Further potentially, the source of the first fluid is a pressure reservoir connected to the gun assembly using a threaded adaptor and / or a hose pipe.

Yet further potentially, the source of the first fluid is a pressure reservoir accommodated within the gun assembly

Possibly, the first fluid is a base fluid suitable generally for a polyurethane foam systems, and may include a polyol, isocyanate, blowing agents, surfactants, and other suitable components

Potentially, the source of the second fluid is a pressure reservoir having a pressurizing means so as to keep the fluid pressurized for a flow from the reservoir towards the disposable nozzle.

Potentially, the source of the second fluid is a pressure reservoir accommodated within the gun assembly.

Further potentially, the source of the second fluid is a pressure reservoir connected to the gun assembly using a threaded adaptor and / or a hose pipe.

Possibly, the second fluid is generally a catalyst liquid, including but not limited to basic and acidic amine, tertiary amine catalysts , alkyl tin carboxylates, oxides and mercaptides oxides, triethylenediamine (TEDA, 1,4-diazabicyclo[2.2.2]octane), dimethylcyclohexylamine (DMCHA), dimethylethanolamine (DMEA), dibutyltindilaurate, water, glycerol, and diethylene glycol (DEG).

Generally, the inlet non-return chamber comprises a horizontal base portion extended towards a substantially tubular blocking portion.

Further, the horizontal base portion of the non-return chamber comprises a plurality of cavities to enable flow of the fluids there through within the mixing chamber.

Potentially, the connecting mechanism is a snap-fit type locking mechanism.

In another aspect of the present disclosure, a method for mixing two or more fluids in a predetermined ratio using the above mentioned apparatus is disclosed. The method includes connecting the disposable nozzle to the gun assembly. Thereafter, the trigger member of the gun assembly may be depressed to release a predetermined amount of the first fluid and a predetermined amount of the second fluid either sequentially or simultaneously from their respective hollow channels into the mixing chamber of the disposable nozzle through the strangulated point type exit of the gun assembly. The first fluid is then mixed with the second fluid and dispensed through an outlet portion of the disposable nozzle.

The details of one or more implementations are set forth in the accompanying drawings and the description below. Other aspects, features and advantages of the subject matter disclosed herein will be apparent from the description, the drawings, and the claims.

### Brief Description of drawings

FIG. 1 is a schematic view of a dispensing gun apparatus, in accordance with one embodiment of the present disclosure;
FIG. 2 is a perspective view of the dispensing gun apparatus, in accordance with an embodiment of the present disclosure;
FIG. 3a is a cross sectional view of the dispensing gun apparatus, in accordance with an embodiment of the present disclosure;
FIG. 3b is a cross-sectional view of a tubular sleeve of the gun assembly, in accordance with an embodiment of the present disclosure;
FIG. 3c is a perspective view of the dispensing gun apparatus, in accordance with another embodiment of the present disclosure;
FIG. 4 is a perspective view of a dispensing nozzle, in accordance with an embodiment of the present disclosure; and
FIG. 5 is a flowchart illustrating steps for mixing two or more fluids, in accordance with an embodiment of the present disclosure; and

### Detailed Description of the Preferred Embodiments

As required, a schematic, exemplary-only embodiment of the present application is disclosed herein; however, it is to be understood that the disclosed embodiment is merely exemplary of the present disclosure, which may be embodied in various and / or alternative forms. Specific structural and functional details disclosed herein are not to be interpreted as limiting, but merely as a basis for the claims and as a representative basis for teaching one skilled in the art to variously employ the present disclosure in virtually any appropriately detailed structure.

Aspects, advantages and/or other features of the exemplary embodiment of the disclosure will become apparent in view of the following detailed description, which discloses various non-limiting embodiments of the invention. In describing exemplary embodiments, specific terminology is employed for the sake of clarity. However, the embodiments are not intended to be limited to this specific terminology. It is to be understood that each specific portion includes all technical equivalents that operate in a similar manner to accomplish a similar purpose.

Exemplary embodiments may be adapted for many different purposes and are not intended to be limited to the specific exemplary purposes set forth herein. Those skilled in the art would be able to adapt the exemplary-only embodiment of the present disclosure, depending for example, on the intended use of adapted embodiment. Moreover, examples and limitations related therewith brought herein below are intended to be illustrative and not exclusive. Other limitations of the related art will become apparent to those of skill in the art upon a reading of the following specification and a study of the related figures.

The present application discloses a dispensing gun apparatus for mixing and dispensing two or more fluids in a predetermined ratio. For example, a base fluid such as polyol and a catalyst fluid such as a basic and / or acidic amine may be mixed in a predetermined proportion such as 50-50, 60-40, 70-30, or the like and dispensed through the dispensing gun apparatus. In a preferred embodiment, the apparatus includes a gun assembly and a disposable nozzle fluidly connected to the gun assembly. It is to be understood that unless otherwise indicated this invention need not be limited to applications for foaming fluids. As one of ordinary skill in the art would appreciate, variations of the invention may be applied to other chemically reactive and / or non-reactive components. Further the gun assembly may be any housing capable of supporting disposable nozzle and may take a wide variety of different forms without deviating from the scope of the disclosure. Moreover, it should be understood that embodiments of the present invention may be applied in combination with various fluid delivery devices and / or reservoirs for various possibly applications. It must also be noted that, as used in this specification and the appended claims, the singular forms "a," "an" and "the" include plural referents unless the context clearly dictates otherwise. Thus, for example, the term "an opening" is intended to mean a single opening or a combination of openings, "a fluid" is intended to mean one or more fluids, or a mixture thereof.

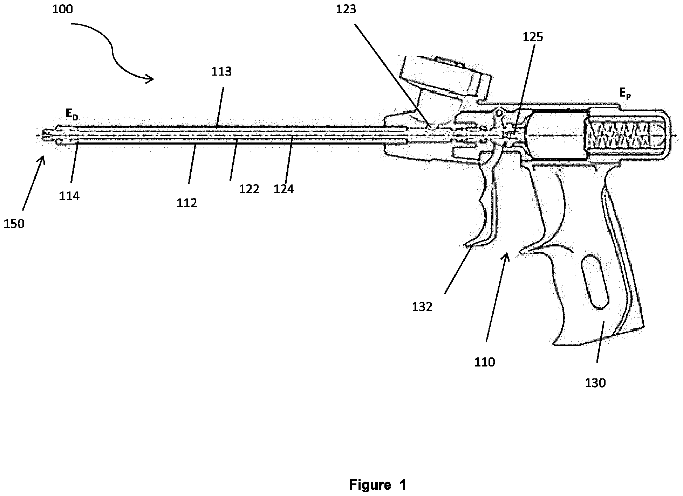

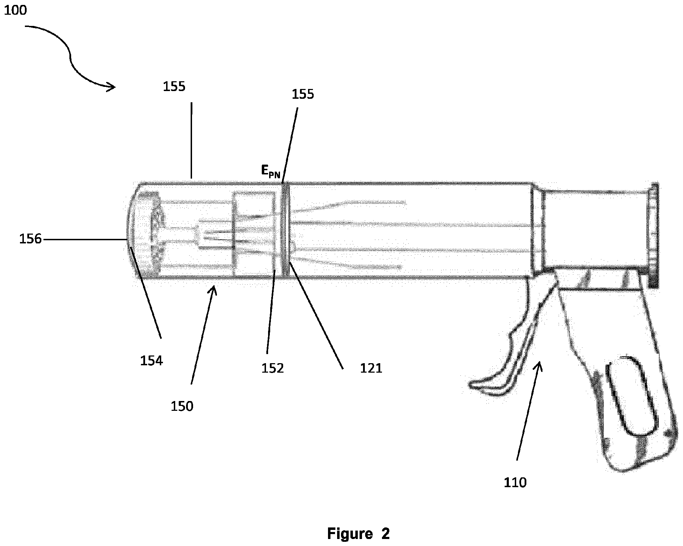

Referring to Figs. 1 and 2, a dispensing gun apparatus **100** includes a gun assembly **110**, and a disposable nozzle **150** fluidly connectable to the gun assembly **110**. The gun assembly **110** is a generally gun shaped structure, comprising a longitudinal sleeve **112** having a generally tubular shape, extending between a distal end **E_{D}** and a proximal end **E_{P}**. The sleeve **112** comprises a longitudinal bore **113** extending axially away from the proximal end **E_{P}** towards a generally strangulated tip type exit **114** at the distal end **E_{D}**. The longitudinal bore **113** of the sleeve **112** comprises an outer hollow channel **122** and an inner hollow channel **124** substantially concentric to the outer hollow channel **122**. The gun assembly **110** further comprises a hand grip **130** extending at an angle generally ranging between **45°** and **75°** with the proximal end **E_{P}** of the sleeve **112**. The gun assembly **110** further comprises a trigger member **132** pivotally connected to the hand grip **130**, configured to activate a first valve **123** of outer hollow channel **122** and a second valve **125** of inner hollow channel **124** so as to enable a flow of predetermined amount of fluid there through.

The disposable nozzle **150** comprises an inlet non-return chamber **152** at a proximal end **E_{PN}**. The disposable nozzle **150** further comprises a mixing chamber **154** adjacent to and extending away from the inlet non-return chamber **152**. Further, the dispensing nozzle comprises an outlet portion **156** configured to dispense the fluid mixed within the mixing chamber **154**.

The disposable nozzle **150** further comprises a connecting mechanism **[not shown]** configured onto an external surface **155** for enabling a grasping of disposable nozzle **150** onto the gun assembly **110**. In some embodiments, the disposable nozzle **150** is affixed to the gun assembly **110** by a fastening mechanism including a twist and click attachment. In some preferred embodiments, the disposable nozzle **150** is affixed to the gun assembly **110** using a snap-fit type locking mechanism. In some other embodiments, the connecting mechanism comprises holes on the external surface **155** of the disposable nozzle **150** and complementary notches on an external surface **121** of the gun assembly **110** such that when pressed against each other the notches get snap-fitted in the holes. Alternatively, the connecting mechanism comprises holes on external surface **121** of the gun assembly **110** and notches on the external surface **155** of the disposable nozzle **150** such that when pressed against each other the notches get snap fitted into the holes.

Further, the connecting mechanism may, in some examples, include a threading on an external surface **155** of the disposable nozzle **150**. Further. in such embodiments, a complementary threaded bore [not shown] is configured on an internal surface of the gun assembly. Such complementary threading facilitates an easy detachable connection between the gun assembly **110** and the disposable nozzle **150**. Alternatively, any known mechanism may be used to detachably connect the gun assembly **110** to the nozzle **150** such that strangulated type pointed exit **114** of the gun assembly **110** is disposed within the inlet non-return chamber **152** chamber of the disposable nozzle **150**. In all such embodiments, the gun assembly **110** accommodates a complementary connecting portion to enable affixation to the disposable nozzle **150**

In use, when a user presses the trigger member **132**, a predetermined amount of the first fluid and the second fluid flows through the strangulated tip type exit **114** and non-return chamber **152** to the mixing chamber **154** of the disposable nozzle and is dispensed through the outlet portion **156** of the disposable nozzle.

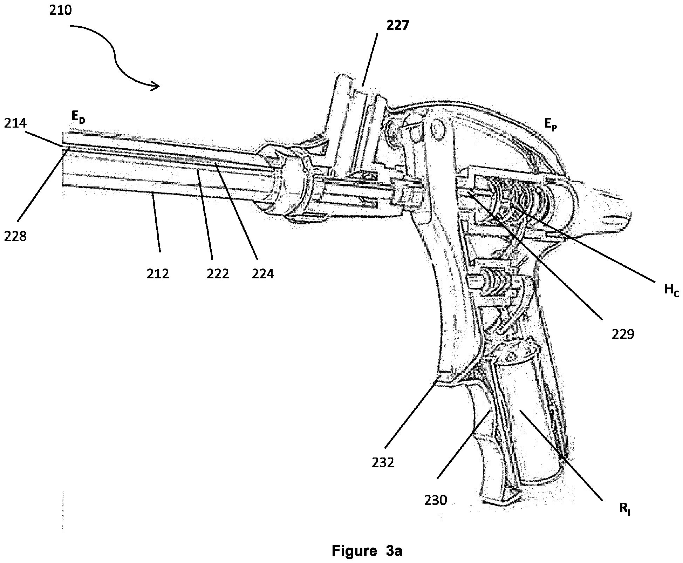

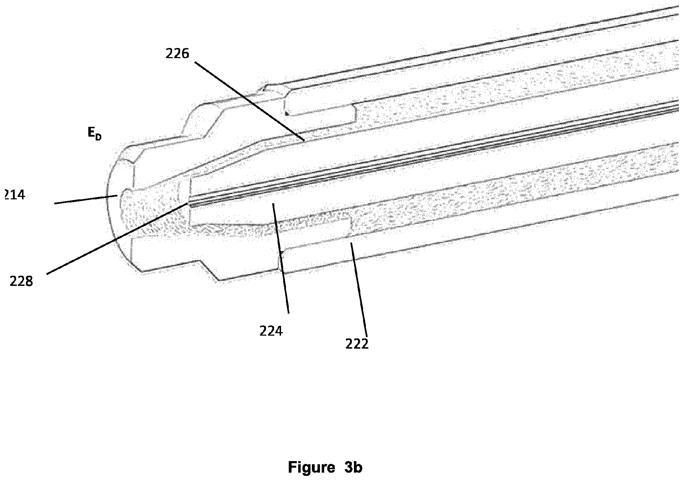

Fig. 3a illustrates a gun assembly **210** according to a preferred embodiment of the present invention. The gun assembly **210** comprises a tubular sleeve **212** having a strangulated tip exit **214 [displayed in** **fig. 3b****]** at a distal end **E_{D}** and extending angularly towards a hand grip **230** at a proximal end **E_{P}.** The sleeve **212** consisting of two hollow concentric channels, an outer hollow channel **222** having a diameter **D_{O},** a distal opening **226** and a proximal opening **227** and an inner hollow channel **224** having a diameter **D_{I}**, a distal opening **228** and a proximal opening **229**. The inner hollow channel **224** longitudinally and axially extends towards the strangulated tip exit **214** such that distal opening **228** of inner hollow channel **224** touches and closes the strangulated tip exit **214** thereby avoiding flow of any fluid there through. As displayed in fig. 3b, the concentric outer hollow channel **222** longitudinally towards the strangulated tip exit **214** and has a length shorter than the length of the inner hollow channel **224** such that the distal opening of outer hollow channel **222** stands away from the strangulated tip exit **214** of the tubular sleeve **212**. The length of the hollow channels **222** and **224** may be varied in accordance with connection to the source of fluids such as a pressure reservoir and / or hose pipe. Further, the diameter of the hollow channels may be varied depending on the intended ratio proportion in which the first fluid and the second fluid have to be mixed. Additionally, wall thickness and internal cross-section area of the inner hollow **224** channel and the outer hollow channel **222** may be varied to achieve a desired ratio proportion in which the first fluid and second fluid have to be mixed.

In an embodiment of the present invention, the distal opening **226** of the outer hollow channel **222** may be disposed angularly towards the distal opening **228** of inner hollow channel **224**, according to ease of flow of fluid from outer hollow channel **222** through the strangulated exit **214** of the tubular sleeve **212**. In some embodiments, the distal opening **226** of the outer hollow channel **222** is lipped at an angle **θi [not shown]** with the inner hollow channel **224**. The value of **θi** may include any possible angle values including angle ranging between **5°** and **175°** and preferably between **5°** and **75°**. Alternatively, the distal opening **226** of the outer hollow channel **222** may be disposed in different configurations so as to achieve an ease of flow of liquid in the direction of the strangulated exit **214**.

The outer hollow channel **222** is connected to a source of first fluid through a first valve **V_{O}** [not shown but in accordance with valve **123** of Fig. 1]. In some embodiments of the present invention, the source of first fluid is a pressurized reservoir **Rₒ** [not shown]. Further in such embodiments, the pressurized reservoir **Rₒ**, in some examples is connected to the outer hollow channel **222** through a hose pipe connected to channel via a threaded adaptor **Aₒ** [not shown]. In some other examples, the pressurized reservoir **Rₒ** is connected to the gun assembly **210** at a side position. Alternatively, the pressurized reservoir **Rₒ** may be connected to the gun assembly **210** at any suitable position. The valve **Vₒ** is generally an open valve. However, in some embodiments, the valve **Vₒ** may be any kind of valve known in the art.

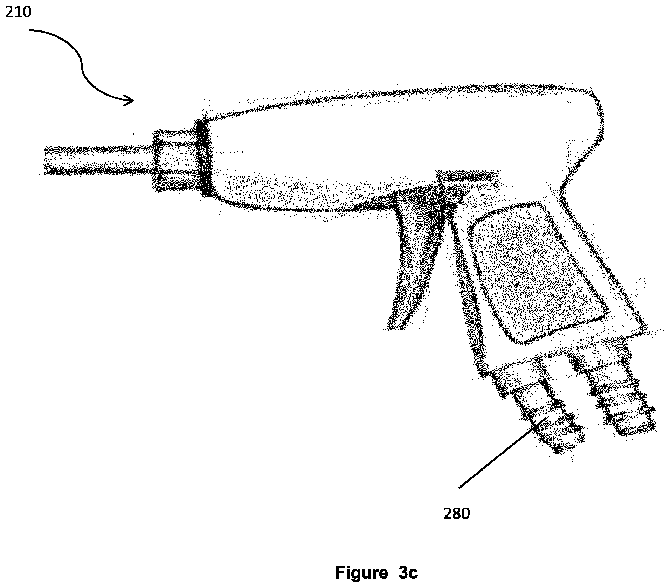

The inner hollow channel **224** is connected to a source of second fluid through a second valve **V_{I}** [not shown but in accordance with valve **125** of Fig. 1]. In some embodiments of the present invention, the source of first fluid is a pressurized reservoir **R_{I}** [not shown].. Further in such embodiments, the pressurized reservoir **R_{I}**, in some examples is connected to the inner hollow channel **224** through a hose pipe connected to channel via one or more threaded adaptor **280** [as shown in fig 3c]. In some other examples, the pressurized reservoir **R_{I}** is accommodated within the hand grip **230** of the gun assembly **210 [as shown in** **Fig. 3a****].** Alternatively, the pressurized reservoir **R_{I}** may be connected to the gun assembly **210** at any suitable position. In such examples the hollow channel is connected to the pressurized reservoir **R_{I}** through a hollow coil **H_{C}**.

The pressure reservoir **R_{O} and R_{I}** are means of storing fluid under a pressure such that the fluid flowing out through such pressure reservoir may be able to flow from the reservoir towards the disposable nozzle **250**. In some embodiments, the pressurized reservoir **R**_{O} and **R_{I}** may comprise a pressure gauge to keep an operator informed of the pressure at which the fluid is moving. Further in such embodiments, the reservoir **R**_{O} and **R_{I}** may comprise a pressurizing means so as to keep the fluid suitably pressurized.

The valves **Vₒ** and **Vᵢ** may include any generally pressure activated valve which on application of pressure gets opened. However, in some embodiments, the valve **Vₒ** and **Vᵢ** may be any kind of known valve. The valves may include any type of check valve valve that allows fluid to flow in one direction, but prevents the fluid from flowing in the opposite direction. Examples of suitable check valves include, but are not limited to, butterfly or flap valves, valves that comprise a ball member biased against a seat by a spring, reed valves, and the like. Further example of valve may include needle valves, ball valves, diaphragm valves, shuttle valves or any other type of valve. Further, the valves may be manually actuated, pneumatically actuated, hydraulically actuated, electrically actuated, and/or magnetically actuated. Further in some embodiments, the valves may take a wide variety of different forms. For example, in some instances, the valves may be any arrangement that selectively opens and closes a flow of fluid from the hollow channels **222** and **224** towards the nozzle **250**.

The first fluid is generally a base fluid suitable generally for polyurethane foam systems, and may include one or more of but not limited to a polyol, isocyanate, blowing agents, surfactants, and other suitable components The second fluid is generally a catalyst liquid, including but not limited to basic and acidic amine, tertiary amine catalysts, alkyl tin carboxylates, oxides and mercaptides oxides, triethylenediamine (TEDA, 1,4-diazabicyclo[2.2.2]octane), dimethylcyclohexylamine (DMCHA), dimethylethanolamine (DMEA), dibutyltindilaurate, water, glycerol, and diethylene glycol (DEG). However, it should be contemplated for a person skilled in the art that the first fluid and second fluid may include any kind of fluids that are intended to be mixed using the apparatus **200** of the present disclosure.

The hand grip **230** may be a generally pistol-grip shaped handle to facilitate easy grasping of the gun assembly **210** by the operator. Alternatively, the hand grip **230** may be of any shape facilitating easy grasping by the operator. The hand grip **230** comprises a trigger member **232** pivotally connected thereto. The trigger member **232** may be a valve-actuating push button configured to enable flow of first fluid through the outer channel **222** and the flow of second fluid through the inner hollow channel **224** in a sequential manner. In a preferred embodiment, the first valve **Vₒ** is an open valve and the flow of first fluid is restricted by the inner hollow channel **224** covering the exit **214** of the tubular sleeve **212**. In such an embodiment, the trigger member **232** when pressed is configured to pressurize a head portion of the pressurized reservoir **R_{I}** thereby pulling the coil **H_{C}** such that it in turn pulls the inner channel **224** backwardly and opens the valve **V_{I}** to enable a flow of fluid there through into the dispensing nozzle **250**. In other embodiments, the trigger member **232** is connected to valves **Vₒ** as well as **Vᵢ** through multiple coils. In such embodiments, the trigger member **232** when pressed, is configured to open each of the valve in a sequential time gap manner depending upon the design of the hand grip **230** and the connection with the hollow channels **222** and **224**. Accordingly, the design and connection may be varied to achieve a desired time gap between the activation of the first valve **Vₒ** and the second valve **Vᵢ**

In some embodiments, the trigger member **232** may be in direct communication with the valves **Vₒ** and **Vᵢ**. In some other embodiments, the trigger member 232 may be coupled to other components that are in turn coupled to the valves **Vₒ** and **Vᵢ**. For example, the trigger member **232** may be in communication with one or more controllers that are in turn in communication with valves. Further, the trigger **232** may be mechanically coupled to one or more of the valves rather than being in communication through electrical connections.

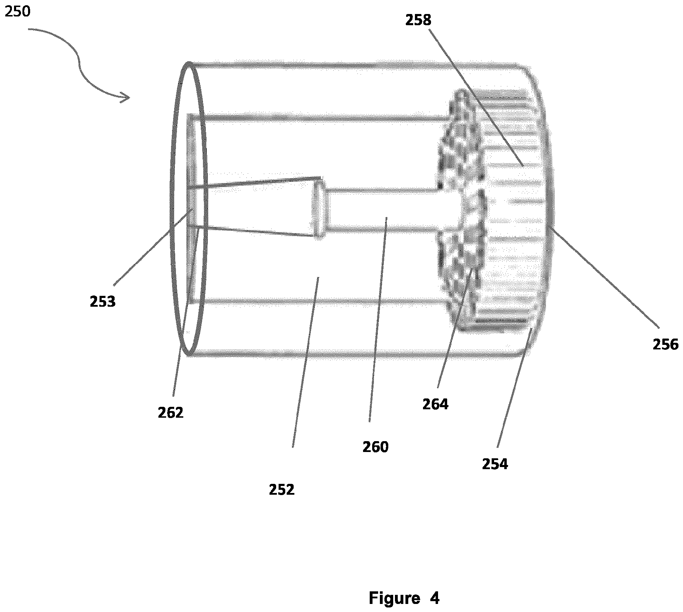

As illustrated in Fig. 4, the disposable nozzle **250** has a generally tubular shape. The disposable nozzle **250** comprises an inlet non-return chamber **252**, a mixing chamber **254** and an outlet portion **256** adjacent the mixing chamber **254** extending away from the inlet chamber **252**. The inlet chamber **252** comprises an inlet opening **253** configured to receive the strangulated exit **214** of the gun assembly **212**. The inlet chamber **252** comprises a base portion **258** extended to a substantially tubular blocking portion **260** towards the inlet opening **253** of the inlet chamber **252** such that when the disposable nozzle **250** is connected to the gun assembly **212**, the blocking portion **260** substantially seals the inner hollow channel **224**. In some embodiments, the blocking portion **260** may be a conical structure having larger diameter towards the base portion **258** and a reducing diameter towards a top portion **262** thereof. In some embodiments, the top portion **262** of the blocking portion **260** is receivable within the inner hollow channel such that the blocking portion **260** completely seals the inner hollow channel **224**. The base portion **258** is of a shape that corresponds to the shape of the inlet chamber **252**. The base portion **258** comprising a plurality of cavities **264**, acts as a partition between the inlet chamber **252** and the adjacent mixing chamber **254**. The cavities **264** of the base portion enable a flow of fluids to be mixed to flow out of the inlet chamber **252** into the mixing chamber **254**. The plurality of cavities **264** enables a segregation of the fluids in very small sized portions and thereby improves the mixing of the fluids. The mixing chamber **254** is of a shape corresponds to the shape of the disposable nozzle **250**. The mixing chamber **254** is connected to the inlet chamber **252** at one end and to the outlet portion **256** at the other end. In some embodiments, the mixing chamber **254** comprises a mixer [not shown] to ensure proper and thorough mixing of the plural components with one another. The mixer may provide a helical path through which the material will be forced for continued mixing thereof. The mixer may include various other configurations to accomplish additional mixing of the plural components within the mixing chamber **254**.

The outlet portion **256** of the disposable nozzle **250** may be an orifice configured onto a distal wall of the disposable nozzle **250**. The outlet portion **256** may be configured to dispense the mixture formed within the mixture chamber **254** to a target site.

In some embodiments, the outlet portion comprises a detachable spray head [not shown] attached to the disposable nozzle **250**. The spray head generally includes a hollow interior having a spray tip inlet in fluid communication with a spray tip outlet. Preferably, the spray tip inlet includes internal threads that threadably engage the external threads formed on the disposable nozzle **250** to detachably fix the spray head to the disposable nozzle **250**. Although threadably engaging the spray tip with the nozzle is preferred, other means for detachably fixing the spray head to the outlet portion **256** of the disposable nozzle **250**, such as a twist lock engagement, friction fit, snap fit, and the like, may be used without departing from the scope of the invention.

The spray head outlet may have any shape to produce the desired spray pattern. Preferably, the spray pattern produced by the spray head outlet is different from the spray pattern produced by the outlet portion **256** without a spray head affixed thereto. In some embodiments, the spray head may be attached to a flexible hose for modifying the foam spray pattern. In such embodiments, the disposable nozzle **250** may be provided with a series of hose engaging raised portions conventionally used to couple the disposable nozzle **250** to a hose.

The dispensing gun apparatus **200** further comprises a connecting mechanism [not shown] for locking the disposable nozzle **250** onto the gun assembly **210** such that the strangulated exit **214** of the tubular sleeve **212** sealingly and fluidly connects to the inlet **263** of the inlet chamber **252** of the disposable nozzle **250**. In the current and preferred embodiment, the connecting mechanism includes a snap fit type locking mechanism. Such a locking mechanism includes two or more notches configured on to an external surface of the gun assembly. Further, the locking mechanism comprises complementary holes onto the external surface of the disposable nozzles. When intended to connect the notches are snap fitted into the holes. In other embodiments, different locking mechanism such as threaded engagement type locking mechanism, twist and click locking mechanism, friction fit, fasteners or any other kind of suitable known locking mechanism may be used to lock the disposable nozzle **250** on to the gun assembly **210**, without departing from the scope of the invention.

In some embodiments, the gun assembly **210**, including the tubular sleeve **212**, and the connecting mechanism may be formed of a material such as a metal, a composite material or any other material suitable to make the assembly a reusable unit, and making it applicable to cleaning and purging. In other embodiments, the gun assembly **210**, including the tubular sleeve **212**, the connecting mechanism and the disposable nozzle **250**, may be formed of any suitable polymer such as a plastic, polyolefin such as polyethylene, homopolymers and copolymers of vinyl acetate such as ethylene vinyl acetate copolymer, polyvinylchlorides, homopolymers and copolymers of acrylates such as polymethylmethacrylate, polyethylmethacrylate, polymethacrylate, ethylene glycol dimethacrylate, ethylene dimethacrylate and hydroxymethyl methacrylate, polyurethanes, polyvinylpyrrolidone, 2-pyrrolidone, polyacrylonitrile butadiene, polycarbonates, polyamides, fluoropolymers such as polytetrafluoroethylene and polyvinyl fluoride, polystyrenes, homopolymers and copolymers of styrene acrylonitrile, cellulose acetate, homopolymers and copolymers of acrylonitrile butadiene styrene, polymethylpentene, polysulfones, polyesters, polyimides, polyisobutylene, polymethylstyrene and other suitable material known to those skilled in the art.

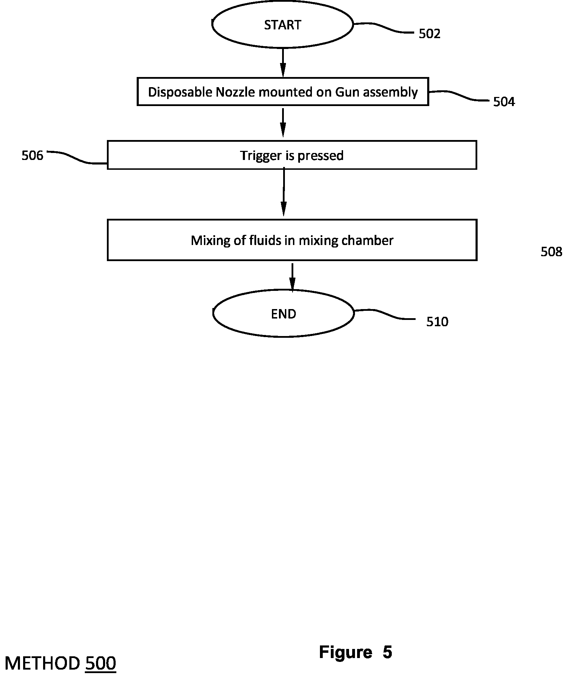

Fig.5 with reference to Figs.1 through 4,is a flow diagram illustrating a method **500** for mixing and dispensing two or more fluid using the dispensing gun apparatus **100**. The method **500** starts at step **502**, and proceeds to step **504** where the disposable nozzle **250** is mounted on to the gun assembly **210** using the connecting mechanism as applicable. The method **500** then proceeds to step **506**, where an operator depresses the trigger member **232** of the gun assembly **210** which in turn activates the first valve **Vₒ** and the second valve **Vᵢ** in a sequential manner with a predetermined time gap there between. In some embodiments, the depression of trigger member **232** enables the activation of the first valve **Vₒ** the second valve **Vᵢ** simultaneously. Accordingly, the first fluid and second fluids are flown into out of the respective hollow channels either simultaneously or otherwise sequentially with the predetermined time gap there between. The predetermined time gap is dependent upon the geometry of the trigger member **232** and its connection the first valve **Vₒ** the second valve **Vᵢ**. The activation of valves **Vₒ** and **Vᵢ** enables a flow of a predetermined amount of the first fluid and a predetermined amount of the second fluid from the respective hollow channels **222** and **224** into the inlet non-return chamber **252** of the disposable nozzle **250**. The predetermined amount of the first fluid and the second fluid that is dispensed through the pressure reservoir **Rₒ** and **R_{I}** is dependent on the time gap between the activation of valves **Vₒ** and **Vᵢ** and / or on the diameters of the hollow channels **222** and **224**. Accordingly, by adjusting the geometry of the trigger member **232** and the diameter of the hollow channels **222** and **224**, an exact proportion of the first fluid and the second fluid may be mixed, thereby avoiding the possibility of an operator error in selecting the exact ratio of the fluids to be mixed. The method **500** then proceeds to step **508** where the fluid to be mixed travels from the non-return chamber **252** to the mixing chamber **254** through the cavities **263** of the base portion **258** of the non-return chamber **252**. The fluid is then mixed within the mixing chamber **254** and dispensed through the outlet portion **256** of the disposable nozzle **250**.

When a particular dispensing application has been completed, the connecting mechanism is then unlocked to take out the disposable nozzle **250** and the gun assembly **210** may be cleaned for reuse with a new disposable nozzle **250**. While the method has been disclosed for only two fluids, it should be contemplated that three of more concentric channels may be used for mixing more than two components without deviating from the scope of the disclosure. Further, though the dispensing apparatus **200** of the invention is particularly useful with a polyurethane foam system as described, the apparatus can be used with any system in which plural components are to be mixed and dispensed, and is particularly useful where the plural components are reactive with one another, and it is desired to maintain each of the components separate from one another until mixing.

### INDUSTRIAL APPLICABILITY

The present disclosure relates to a dispensing gun apparatus for mixing and dispensing two or more fluids in a predetermined ratio. The predetermined ratio in which the two or more fluids are mixed is fixed by the manufacturer on the basis of the diameter of the hollow channels and therefore avoids the possibility of an operator error during the mixing / metering operation thereby providing a highly accurate proportion based mixture. Further, the apparatus of the current disclosure offers proper mixing of the fluids components to be mixed thereby providing a highly homogeneous mixture of the fluid components to be mixed.

The dispensing gun apparatus is particularly useful for polyurethane foam systems, wherein a plurality of reactive components are mixed and dispensed in a foaming process. Additionally, the apparatus may also be useful in other applications such as with various thermosetting plastics, spray catalyst glues, dyes, gel coats or the like. In most instances, the components to be mixed will be chemically reactive with one another, but the apparatus may also be used with non-reactive liquids which are to be mixed and dispensed. Similarly, although the invention has been described with respect to a two fluid system, it should be contemplated that three or more fluids may mixed using the same system by utilizing an additional innermost hollow channel without deviating from the rest of the invention.

Further, the apparatus allows the operator to use detachable spray heads and therefore provides a user with increased flexibility. The user may spray foam through the nozzle without the spray head to produce a foam spray having a known spray pattern, or the user may affix a spray tip to the nozzle to produce a different foam spray pattern without replacing or purchasing a different nozzle. This saves time and money by reducing waste and increasing inefficiency.

Throughout the specifications of the present disclosure, the term "comprising" means including but not necessarily to the exclusion of other elements or steps. In other words, the term comprising indicates an open list. Furthermore, all directional references (such as, but not limited to, upper, lower, inner, outer, upward, downward, inwards, outwards, right, left, rightward, leftward, inside, outside, top, bottom, above, below, vertical, horizontal, clockwise, and counter=clockwise, lineal, axial and/or radial, or any other directional and/or similar references) are only used for identification purposes to aid the reader's understanding of illustrative embodiments of the present disclosure, and may not create any limitations, particularly as to the position, orientation, or use unless specifically set forth in the claims. Moreover, all directional references are approximate and should not be interpreted as exact, but rather as describing a general indicator as to an approximate attitude.

Similarly, joinder references (such as, but not limited to, attached, coupled, connected, accommodated, and the like and their derivatives) are to be construed broadly and may include intermediate members between a connection of segments and relative movement between segments. As such, joinder references may not necessarily infer that two segments are directly connected and in fixed relation to each other.

In some instances, components are described with reference to "ends" having a particular characteristic and/or being connected with an-other part. However, those skilled in the art will recognize that the present disclosure is not limited to components which terminate immediately be-yond their points of connection with other parts. Thus, the term "end" should be interpreted broadly, in a manner that includes areas adjacent, rearward, forward of, or otherwise near the terminus of a particular segment, link, component, part, member or the like. Additionally, all numerical terms, such as, but not limited to, "second", "second", "third", "fourth", or any other ordinary and/or numerical terms, should also be taken only as identifiers, to assist the reader's understanding of the various embodiments, variations and/or modifications of the present disclosure, and may not create any limitations, particularly as to the order, or preference, of any embodiment, variation and/or modification relative to, or over, another embodiment, variation and/or modification.

As will be readily apparent to those skilled in the art, the present invention may easily be produced in other specific forms without departing from its essential characteristics. The present embodiments is, therefore, to be considered as merely illustrative and not restrictive, the scope of the invention being indicated by the claims rather than the foregoing description, and all changes which come within therefore intended to be embraced therein. Many variations, modifications, additions, and improvements are possible. More generally, embodiments in accordance with the present disclosure have been described in the context of preferred embodiments. Functionalities may be separated or combined in procedures differently in various embodiments of the disclosure or described with different terminology. These and other variations, modifications, additions, and improvements may fall within the scope of the disclosure as defined in the appended claims.

## Claims

1. A dispensing gun apparatus for mixing two or more fluids in a predetermined ratio, the apparatus comprising:
a disposable nozzle, the nozzle comprising a mixing chamber adjacent to an inlet non-return chamber wherein the non-return chamber comprising a substantially tubular blocking portion extending towards an inlet end of the disposable nozzle;
a gun assembly, the assembly comprising:
a hollow outer channel of a first diameter connected to a source of a first fluid through a first valve;
a hollow inner channel of a second diameter connected to a source of a second fluid through a second valve wherein the inner hollow channel is substantially concentric to the outer hollow channel;
a trigger member for activating the first valve and the second valve enabling a flow of the first fluid and the second fluid in either a simultaneous or a sequential manner;
a connecting mechanism for fluidly connecting the gun assembly to the disposable nozzle;
wherein when the disposable nozzle is connected to the gun assembly, the blocking portion substantially blocks the inner hollow channel of the gun assembly.

2. The apparatus of claim 1, wherein the gun assembly comprises a substantially tubular sleeve extending from a strangulated pointed exit towards an angular hand grip wherein the tubular sleeve accommodates the concentric hollow channels and the handgrip comprises the trigger member pivotally attached thereto.

3. The apparatus of claim1, wherein the strangulated pointed exit is substantially axial and connected to the inner hollow channel such that the inner hollow channel closes the exit.

4. The apparatus of claim 1, where in the first valve is an open valve.

5. The apparatus of claim 1, 2, 3 and 4, wherein the activation of the trigger enables a backward movement of the inner hollow channel thereby enabling the flow of first fluid through the strangulated exit into the disposable nozzle wherein further the activation subsequently opens the second valve and pushes the inner channel to its original position thereby enabling the flow of the second fluid through the strangulated exit into the disposable nozzle.

6. The apparatus of claim 1, wherein the source of first fluid is a pressure reservoir connected to the outer hollow channel and accommodated within the gun assembly.

7. The apparatus of claim 1, wherein the first diameter of the outer hollow channel is greater than the second diameter of the inner hollow channel.

8. The apparatus of claim 1 and 7, where in the ratio of the first diameter and the second diameter corresponds to a mixing ratio of the first fluid and the second fluid.

9. The apparatus of claim 1, wherein the disposable nozzle further comprises an outlet portion adjacent the mixing chamber extending away from the inlet chamber.

10. The apparatus of claim 9, wherein the outlet portion is an orifice configured onto a wall of the disposable nozzle configured to dispense a mixture out of the mixing chamber.

11. The apparatus of claim 9, wherein the outlet portion further comprises a detachable spray head connected thereto.

12. The apparatus of claim 1, wherein the trigger member activates the first valve and the second valve with a predetermined time gap.

13. The apparatus of claim 1, wherein the non-return chamber comprises a base portion longitudinally extended towards the tubular blocking portion such that the base portion acts as a partition between the inlet chamber and the mixing chamber.

14. The apparatus of claim 13, wherein the base portion comprises a plurality of cavities enabling a flow of fluid from the non-return chamber to the mixing chamber.

15. The apparatus of claim 13, wherein the blocking portion is receivable within the inner hollow channel such that when the disposable nozzle is connected to the gun assembly, the blocking portion sealingly blocks the inner hollow channel.
